# EUROPÄISCHE PATENTANMELDUNG

(11) **EP 1 936 968 A1**
(43) Veröffentlichungstag der Anmeldung: **25.06.2008**
(21) Anmeldenummer: 07007477.8
(22) Anmeldetag: 12.04.2007
(51) Int. Cl.: H04N 5/64, H05K 7/14

(54) **Mediengerät**

(30) Priorität: 20.12.2006 DE 102006060232
(71) Anmelder: Albrecht Jung GmbH & Co. KG, 58579 Schalksmühle (DE)
(72) Erfinder: Kuhn, Heinz-Jürgen, 58509 Lüdenscheid (DE)

(57) **Zusammenfassung**

Es wird ein Mediengerät vorgeschlagen, welches zum Empfang und zur Wiedergabe von Rundfunk und/oder TV Signalen ausgelegt ist, wobei das Mediengerät mehrere Bedienelemente sowie Energieversorgungsmittel, Verstärkungsmittel und Steuermittel aufweist und wobei das Mediengerät in Art eines Elektroinstallationsgerätes für die Gebäudesystemtechnik zumindest einen sockelartig aufgebauten, in eine normale Elektroinstallationsdose montierbaren Einsatzbereich aufweist. Zu dem Zweck, ein Mediengerät zu schaffen, welches nicht nur zum Empfang und zur Wiedergabe von Rundfunk und/oder TV Programmen geeignet ist, sondern darüber hinaus dem Benutzer die Möglichkeit bietet, auf vielfältige Art und Weise Kommunikationen über Netzwerke, wie Internet, Intranet und/oder Bussysteme der Gebäudesystemtechnik auszuüben bzw. zu nutzen, weist das Mediengerät zumindest eine Leiterplatte auf, auf welcher zur bidirektionalen Kommunikation mit einem Netzwerk eine, zumindest einen Mikrocontroller und zumindest ein Gateway aufweisende Steuereinheit angeordnet ist, welche mit einem Medienkoppler in Verbindung steht, der zumindest einen Transceiver aufweist.

## Beschreibung

Die vorliegende Erfindung geht von einem gemäß Oberbegriff des Hauptanspruches konzipierten Mediengerät aus.

Derartige Mediengeräte sind in der Regel dafür vorgesehen, dem Benutzer auf komfortable Art und Weise die Nutzung der in einer großen Anzahl angebotenen Rundfunk und/oder TV Programme zu ermöglichen. Dem Benutzer soll dabei die Möglichkeit gegeben werden, ein solches Mediengerät auf einfache Art und Weise in verschiedene Räume, wie z. B. die Küche, das Bad, das Wohnzimmer, den Flur usw. seines Gebäudes bzw. seiner Wohnung installieren zu können.

Ein dem Oberbegriff des Hauptanspruches entsprechendes Mediengerät ist durch die DE 201 16 556 U1 bekannt geworden. Ein derartiges Mediengerät weist lediglich Empfangs- und Wiedergabeeinrichtungen für Rundfunk- und/oder Fernsehsignale auf. Dabei ist ein solches Mediengerät mit Spannungsversorgungsmittel, Signalempfangsmittel, Verstärkermittel, Steuermittel und Signalwiedergabemittel versehen. Die Empfangsmittel bilden ein Hauptmodul, welches nach Art eines Elektroinstallationsgerätes der Gebäudesystemtechnik ein sockelartig ausgebildetes, in eine normale Installationsdose montierbares Einsatzmodul aufweist, auf welches zumindest ein mit den Wiedergabemitteln versehenes Aufsatzmodul aufsteckbar ist. Ein derartiges Mediengerät erlaubt somit eine einfache Montage, in die verschiedenen Räumlichkeiten eines Gebäudes bzw. einer Wohnung. Eine Kommunikation mit Netzwerken, wie z. B. Internet, Intranet, Bussystemen der Gebäudesystemtechnik usw. ist jedoch nicht möglich.

Der vorliegenden Erfindung liegt deshalb die Aufgabe zugrunde, ein Mediengerät zu schaffen, welches nicht nur zum Empfang und zur Wiedergabe von Rundfunk und/oder TV Programmen geeignet ist, sondern darüber hinaus dem Benutzer die Möglichkeit bietet, auf vielfältige Art und Weise Kommunikationen über Netzwerke, wie Internet, Intranet und/oder Bussysteme der Gebäudesystemtechnik auszuüben bzw. zu nutzen. Dabei besteht Vorteilhafterweise die Möglichkeit, die Kommunikation auf akustischem und/oder optischem Wege abzuwickeln.

Diese Aufgabe wird durch die im Hauptanspruch angegebenen Merkmale gelöst.

Bei einem solchermaßen ausgebildeten Mediengerät ist besonders vorteilhaft, dass der Benutzer die Möglichkeit erhält, neben der Nutzung von Radio und/oder Fernsehprogrammen je nach Bedarf auf einfache Art und Weise Funktionen und/oder Dienste, wie z. B. Telefon, Bildtelefon, Bildmitteilungen (MMS), elektronische Mitteilungen (Mail, SMS), Podcasting, gespeicherte Musik, gespeicherte Bilder (mp3, jpg) zu nutzen bzw. in Anspruch zu nehmen.

Des weiteren ist besonders vorteilhaft, dass an ein solches Mediengerät auch eine Hauskommunikationsanlage mit all ihren Funktionalitäten (akustische und/oder optische Kommunikation, Tür öffnen usw.) angeschlossen werden kann. Besonders vorteilhaft ist dabei, wenn die Hauskommunikationsanlage mit einem Netzwerk in Verbindung steht. Weiterhin ist besonders vorteilhaft, dass über vorhandene Bedienelemente auch die Beeinflussung bestimmter Funktionalitäten der Gebäudesystemtechnik, wie z. B. Licht ein- und ausschalten, Licht dimmen, Jalousien öffnen und schließen möglich ist.

Weitere vorteilhafte Ausgestaltungen sind in den Unteransprüchen angegeben. Anhand zweier in den Zeichnungen näher dargestellter Ausführungsbeispiele sei der erfindungsgemäße Gegenstand näher erläutert. Dabei zeigen:
- Fig. 1:: prinziphaft ein erstes Ausführungsbeispiel eines solchen Mediengerätes anhand eines Blockschaltbildes;
- Fig. 2:: prinziphaft ein zweites Ausführungsbeispiel eines solchen Mediengerätes anhand eines Blockschaltbildes;

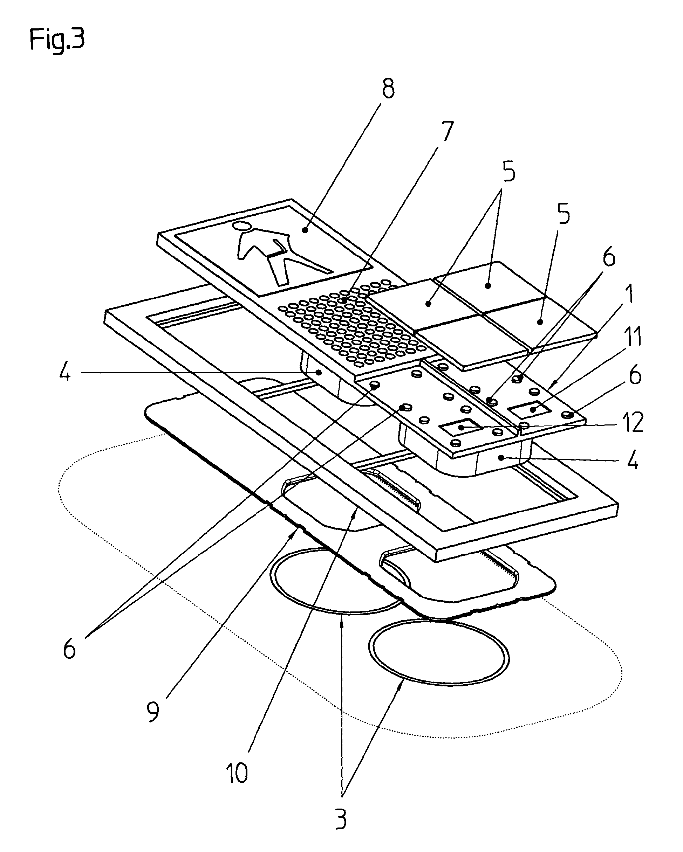

- Fig. 3:: prinziphaft ein solches Mediengerät in Explosionsdarstellung.

Wie aus den Zeichnungen hervorgeht, weist ein solches Mediengerät eine Leiterplatte 1 auf, auf welcher zum Zwecke der bidirektionalen Kommunikation mit einem Netzwerk eine, zumindest einen Mikrocontroller µC sowie ein Gateway GW aufweisende Steuereinheit SE und ein damit in Verbindung stehender, zumindest einen Transceiver TC aufweisender Medienkoppler MK angeordnet ist. Sowohl die Steuereinheit SE mit ihrem Mikrocontroller µC und ihrem Gateway GW, als auch der Medienkoppler MK sind auf der Unterseite der Leiterplatte 1 vorhanden. Die Unterseite der Leiterplatte 1 ist von einem Gehäuse 2 aufgenommen, welches zwei, jeweils in eine normale Elektroinstallationsdose 3 montierbare Einsatzbereiche 4 aufweist. Die Oberseite der Leiterplatte 1 ist mit mehreren, den Bedienelementen 5 zugeordneten Schaltkontaktteilen 6 bestückt. Es sind vier als Drucktasten ausgebildete Bedienelemente 5 vorgesehen, denen jeweils vier Schaltkontaktteile 6 zugeordnet sind. Außerdem ist der Oberseite der Leiterplatte 1 zur Wiedergabe von Toninformationen ein Lautsprecher 7 und zur Wiedergabe von Bildinformationen ein Display 8 zugeordnet. Zudem weist die Leiterplatte 1 ein, der Einfachheit halber nicht dargestelltes, Mikrophon und eine zur Speicherung von Ton- und Bildinformationen vorgesehene interne Speichereinheit auf. Das Mikrophon ist Teil einer sogenannten Freisprecheinrichtung. Um ein externes Speichermedium, wie z. B. einen USB-Stick anschließen zu können, ist die Leiterplatte 1 mit einem entsprechend ausgeführten Anschlussstecker 11 versehen. Zudem ist eine Aufnahmeeinrichtung 12 vorhanden, damit eine Speicherkarte in das Mediengerät eingeführt werden kann. Damit im Bedarfsfall zweitrangige Informationen unterdrückt und erstrangige Informationen hervorgehoben werden können, weist das Mediengerät eine, der Einfachheit halber nicht dargestellte, Umschalteinrichtung auf. So wird durch die Umschalteinrichtung z. B. bei laufendem Radio und/oder TV-Programm der Eingang einer E-Mail, eines Telefonates usw. als erstrangige Information behandelt, also wird das Radio oder TV-Programm unterbrochen und die eingehende E-Mail bzw. das eingehende Telefonat akustisch und/oder optisch deutlich angezeigt. Ist eine Hauskommunikationsanlage an der Mediengerät angeschlossen, so werden die damit in Zusammenhang stehenden Informationen von der Umschalteinrichtung als erstrangige Informationen behandelt. Eine Tragplatte 9 und ein Abdeckrahmen 10 sorgen auf einfache Art und Weise für eine funktionssichere und formschöne Installation des Mediengerätes. Besonders vorteilhaft ist dabei, dass sich das Mediengerät in Art eines Unterputzgerätes der Gebäudesystemtechnik in normale Abmessungen aufweisende Elektroinstallationsdosen 3 montieren lässt. Auf einfache Art und Weise ist somit sowohl eine Wandinstallation, als auch eine Installation in Möbeln eines solchen Mediengerätes möglich.

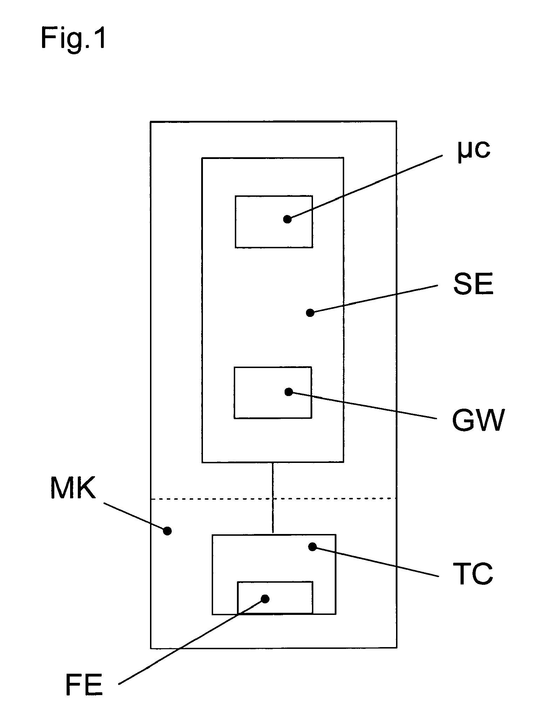

Wie insbesondere aus Figur 1 hervorgeht, ist die Leiterplatte 1 eines Mediengerätes gemäß erstem Ausführungsbeispiel zum Zwecke der bidirektionalen Kommunikation mit einem Netzwerk mit einer, einen Mikrocontroller µC sowie ein Gateway GW aufweisenden Steuereinheit SE und einem, einen ersten Transceiver TC aufweisenden Medienkoppler MK bestückt. Der erste Transceiver TC des Medienkopplers MK steht mit einer Funksende- und Funkempfangseinheit FE in Verbindung, so dass eine drahtlose Verbindung zu einem Netzwerken hergestellt werden kann. Der Benutzer erhält also die Möglichkeit, je nach Bedarf auf einfache Art und Weise drahtlos Funktionen und/oder Dienste, wie z. B. Telefon, Bildtelefon, Bildmitteilungen (MMS), elektronische Mitteilungen (Mail, SMS), Podcasting, gespeicherte Musik, gespeicherte Bilder (mp3, jpg) in beliebigen Räumlichkeiten zu nutzen bzw. in Anspruch zu nehmen. Dabei ist der Zugang zu Netzwerken, wie z. B. Internet, Intranet und/oder Bussysteme der Gebäudesystemtechnik auf komfortable Art und Weise möglich.

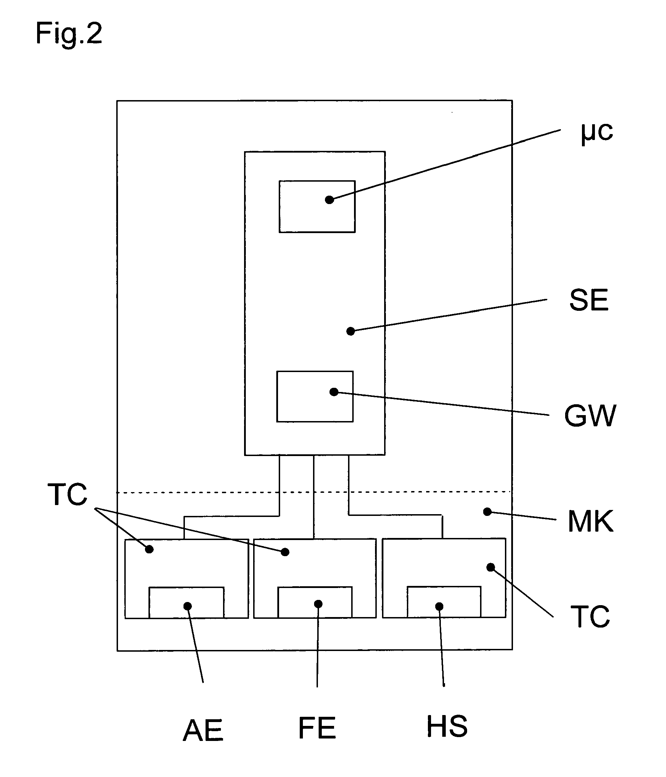

Wie insbesondere aus Figur 2 hervorgeht, ist die Leiterplatte 1 eines Mediengerätes gemäß zweitem Ausführungsbeispiel zum Zwecke der bidirektionalen Kommunikation mit mehreren Netzwerk mit einer, einen Mikrocontroller µC sowie ein Gateway GW aufweisenden Steuereinheit SE und einem, drei Transceiver TC aufweisenden Medienkoppler MK bestückt, so dass sowohl drahtlose als auch drahtgebundene Verbindungen zu verschiedenen Netzwerken hergestellt werden können. Ein erster Transceiver TC steht mit einer Funksende- und Funkempfangseinheit FE, ein zweiter Transceiver TC mit einer Anschlusseinrichtung AE und ein dritter Transceiver TC mit einer Hauskommunikationsschnittstelle HS in Verbindung. Der Benutzer erhält also die Möglichkeit je nach Bedarf auf einfache Art und Weise Funktionen und/oder Dienste wie z. B. Telefon, Bildtelefon, Bildmitteilungen (MMS), elektronische Mitteilungen (Mail, SMS), Podcasting, gespeicherte Musik, gespeicherte Bilder (mp3, jpg) in beliebigen Räumlichkeiten zu nutzen bzw. in Anspruch zu nehmen. Dabei ist der Zugang zu Netzwerken, wie z. B. Internet, Intranet und/oder Bussysteme der Gebäudesystemtechnik auf komfortable Art und Weise möglich. Auch eine Kommunikationsverknüpfung der verschiedenen Netzwerke miteinander ist somit auf einfache Art und Weise möglich. Zudem können, sind mehrere Mediengeräte in eine Wohnung bzw. ein Gebäude installiert, diese ein eigenes Netzwerk bilden.

Des weiteren ist besonders vorteilhaft, dass ein solches Mediengerät auch mit einer Hauskommunikationsanlage verbunden werden kann. Dazu ist der dritte Transceiver TC mit seiner Hauskommunikationsschnittstelle HS vorgesehen. Der Benutzer ist somit in der Lage, alle Funktionalitäten (akustische und/oder optische Kommunikation, Tür öffnen usw.) der Hauskommunikationsanlage über das Mediengerät in Anspruch zu nehmen.

Weiterhin ist besonders vorteilhaft, dass über vorhandene Bedienelemente auch die Beeinflussung bestimmter Funktionalitäten der Gebäudesystemtechnik, wie z. B. Licht ein- und ausschalten, Licht dimmen, Jalousien öffnen und schließen möglich ist.

## Patentansprüche

1. Mediengerät, welches zum Empfang und zur Wiedergabe von Rundfunk und/oder TV Signalen ausgelegt ist, wobei das Mediengerät mehrere Bedienelemente sowie Energieversorgungsmittel, Verstärkungsmittel und Steuermittel aufweist und wobei das Mediengerät in Art eines Elektroinstallationsgerätes für die Gebäudesystemtechnik zumindest einen sockelartig aufgebauten, in eine normale Elektroinstallationsdose montierbaren Einsatzbereich aufweist, **dadurch gekennzeichnet, dass** das Mediengerät zumindest eine Leiterplatte (1) aufweist, auf welcher zur bidirektionalen Kommunikation mit einem Netzwerk eine, zumindest einen Mikrocontroller (µC) und zumindest ein Gateway (GW) aufweisende Steuereinheit (SE) angeordnet ist, welche mit einem Medienkoppler (MK) in Verbindung steht, der zumindest einen Transceiver (TC) aufweist.

2. Mediengerät nach Anspruch 1, **dadurch gekennzeichnet, dass** der Medienkoppler (MK) zur drahtlosen Kommunikation mit einem Netzwerk zumindest einen ersten Transceiver (TC) aufweist, welcher mit einer Funksende- und Funkempfangseinheit (FE) in Verbindung steht.

3. Mediengerät nach Anspruch 1 oder 2, **dadurch gekennzeichnet, dass** der Medienkoppler (MK) zur drahtgebundenen Kommunikation mit einem Netzwerk zumindest einen zweiten Transceiver (TC) mit einer Anschlusseinrichtung (AE) aufweist.

4. Mediengerät nach einem der Ansprüche 1 bis 3, **dadurch gekennzeichnet, dass** der Medienkoppler (MK) und die Steuereinheit (SE) derart ausgeführt sind, dass über diese die Kommunikation über eine WLAN-Verbindung mit zumindest einem Netzwerk durchführbar ist.

5. Mediengerät nach einem der Ansprüche 1 bis 4, **dadurch gekennzeichnet, dass** der Medienkoppler (MK) und die Steuereinheit (SE) derart ausgeführt sind, dass über diese die Kommunikation über eine Bluetooth-Verbindung mit zumindest einem Netzwerk durchführbar ist.

6. Mediengerät nach einem der Ansprüche 1 bis 5, **dadurch gekennzeichnet, dass** der Medienkoppler (MK) und die Steuereinheit (SE) derart ausgeführt sind, dass über diese die Kommunikation mit zumindest einem als Ethernet ausgeführten Netzwerk durchführbar ist.

7. Mediengerät nach einem der Ansprüche 1 bis 6, **dadurch gekennzeichnet, dass** der Medienkoppler (MK) und die Steuereinheit (SE) derart ausgeführt sind, dass über diese die Kommunikation mit zumindest einem als Bussystem der Gebäudesystemtechnik ausgeführten Netzwerk durchführbar ist.

8. Mediengerät nach einem der Ansprüche 1 bis 7, **dadurch gekennzeichnet, dass** der Medienkoppler (MK) und die Steuereinheit (SE) derart ausgeführt sind, dass über diese die Kommunikation mit zumindest einem als Powerline ausgeführten Netzwerk durchführbar ist.

9. Mediengerät nach einem der Ansprüche 1 bis 8 **dadurch gekennzeichnet, dass** der Medienkoppler (MK) und die Steuereinheit (SE) derart ausgeführt sind, dass über diese die Kommunikation mit dem als Internet ausgeführten Netzwerk durchführbar ist.

10. Mediengerät nach einem der Ansprüche 1 bis 9 **dadurch gekennzeichnet, dass** der Medienkoppler (MK) und die Steuereinheit (SE) derart ausgeführt sind, dass über diese die Kommunikation mit dem als Intranet ausgeführten Netzwerk durchführbar ist.

11. Mediengerät nach einem der Ansprüche 1 bis 10, **dadurch gekennzeichnet, dass** die Leiterplatte (1) zur Speicherung von Ton- und/oder Bildinformationen mit zumindest einer internen Speichereinheit in Verbindung steht.

12. Mediengerät nach einem der Ansprüche 1 bis 11, **dadurch gekennzeichnet, dass** die Leiterplatte (1) zur Wiedergabe von Ton- und/oder Bildinformationen mit zumindest einer internen Wiedergabeeinheit in Verbindung steht.

13. Mediengerät nach einem der Ansprüche 1 bis 12, **dadurch gekennzeichnet, dass** die Leiterplatte (1) zum Anschluss eines externen Speichermediums mit zumindest einem Anschlussstecker (11) in Verbindung steht.

14. Mediengerät nach einem der Ansprüche 1 bis 13, **dadurch gekennzeichnet, dass** bei diesem zumindest eine Aufnahmeeinrichtung (12) zum Einschieben einer Speicherkarte vorgesehen ist.

15. Mediengerät nach einem der Ansprüche 1 bis 14, **dadurch gekennzeichnet, dass** bei diesem zur Unterdrückung von zweitrangigen Informationen und zur Hervorhebung von erstrangigen Informationen zumindest eine Umschalteinrichtung vorgesehen ist.

16. Mediengerät nach einem der Ansprüche 1 bis 15, **dadurch gekennzeichnet, dass** der Medienkoppler (MK) zur Verbindung mit einer, zumindest eine Außenstation und zumindest eine Wohnungsstation aufweisenden Hauskommunikationsanlage zumindest einen dritten Transceiver (TC) mit einer Hauskommunikationsschnittstelle (HS) aufweist.

17. Mediengerät nach Anspruch 16, **dadurch gekennzeichnet, dass** die Hauskommunikationsanlage mit einem Netzwerk in Verbindung steht.

18. Mediengerät nach einem der Ansprüche 1 bis 17, **dadurch gekennzeichnet, dass** zumindest eines, eine Ausgestaltung zur Installation in zumindest einen Raum einer Wohnung aufweist.

19. Mediengerät nach einem der Ansprüche 1 bis 18, **dadurch gekennzeichnet, dass** zumindest eines, eine Ausgestaltung zur Installation in zumindest einen Raum eines Hotels aufweist.

20. Mediengerät nach einem der Ansprüche 1 bis 19, **dadurch gekennzeichnet, dass** zumindest eines, eine Ausgestaltung zur Installation in zumindest ein Möbel aufweist.

21. Mediengerät nach einem der Ansprüche 1 bis 20, **dadurch gekennzeichnet, dass** zur Wiedergabe von Tönen zumindest ein Lautsprecher (7) vorgesehen ist.

22. Mediengerät nach einem der Ansprüche 1 bis 21, **dadurch gekennzeichnet, dass** zur Wiedergabe von Bildern zumindest ein Display (8) vorgesehen ist.

23. Mediengerät nach einem der Ansprüche 1 bis 22, **dadurch gekennzeichnet, dass** dieses mit einem Mikrofon ausgerüstet ist.

24. Mediengerät nach einem der Ansprüche 1 bis 23, **dadurch gekennzeichnet, dass** dieses mit einer Kamera ausgerüstet ist.

25. Mediengerät nach einem der Ansprüche 1 bis 24, **dadurch gekennzeichnet, dass** dieses mit einer Freisprecheinrichtung ausgerüstet ist.

26. Mediengerät nach einem der Ansprüche 1 bis 25, **dadurch gekennzeichnet, dass** die Unterseite der Leiterplatte (1) zumindest mit dem Medienkoppler (MK) und der, das Gateway (GW) sowie den Mikrocontroller (µC) aufweisenden Steuereinheit (SE) bestückt ist, und dass die Oberseite der Leiterplatte (1) zumindest mit den, den Bedienelementen (5) zugeordneten Schaltkontaktteilen (6) bestückt ist.

27. Mediengerät nach einem der Ansprüche 1 bis 26, **dadurch gekennzeichnet, dass** die Leiterplatte (1) von einem, zumindest einen Einsatzbereich (4) aufweisenden Gehäuse (2) aufgenommen ist.

28. Mediengerät nach einem der Ansprüche 1 bis 27, **dadurch gekennzeichnet, dass** zumindest ein Bereich der Leiterplatte (1) in Art der MID-Technik (Moulded Interconnected Devices) in das Gehäuse (2) integriert ist.

29. Mediengerät nach einem der Ansprüche 1 bis 28, **dadurch gekennzeichnet, dass** die Energieversorgung über das Netzwerk der drahtgebundenen Kommunikation erfolgt.

30. Mediengerät nach einem der Ansprüche 1 bis 29, **dadurch gekennzeichnet, dass** das Mediengerät aus einem festinstallierbaren Basisteil und einem damit kombinierbaren Mobilteil besteht.
